(19) Europäisches Patentamt
European Patent Office
Office européen des brevets

(11) **EP 1 982 862 B1**

(12) **EUROPÄISCHE PATENTSCHRIFT**

(45) Veröffentlichungstag und Bekanntmachung des Hinweises auf die Patenterteilung:
**14.03.2018 Patentblatt 2018/11**

(51) Int Cl.:
**G06T 13/80** (2011.01)

(21) Anmeldenummer: **08154738.2**

(22) Anmeldetag: **17.04.2008**

(54) **Verfahren zum Anzeigen von Informationen in einem Fahrzeug mit einem sich ändernden Anzeigebild und Anzeigeeinrichtung hierfür**

Method for displaying information in a vehicle with a self-changing display picture and display device for this purpose

Procédé d'affichage d'informations dans un véhicule avec une image d'affichage se modifiant et dispositif d'affichage correspondant

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **17.04.2007 DE 102007018071**

(43) Veröffentlichungstag der Anmeldung:
**22.10.2008 Patentblatt 2008/43**

(73) Patentinhaber: **Volkswagen Aktiengesellschaft**
**38440 Wolfsburg (DE)**

(72) Erfinder: **Dehmann, Rainer**
**10963 Berlin (DE)**

(74) Vertreter: **Reitstötter Kinzebach**
**Patentanwälte**
**Sternwartstrasse 4**
**81679 München (DE)**

(56) Entgegenhaltungen:
**US-B1- 7 062 365**

• **MORRIS G C: "REAL TIME ANIMATION OF DYNAMIC PROCESSES", COMPUT & GRAPHICS,, Bd. 1, 1. Januar 1975 (1975-01-01), Seiten 221-225, XP001375144,**

EP 1 982 862 B1

## Beschreibung

Die vorliegende Erfindung betrifft ein Verfahren zum Anzeigen von den Betrieb eines Fahrzeugs betreffende Informationen auf einem Display, bei dem ein Anzeigebild durch Veränderung eines Bildparameters verändert wird. Ferner betrifft die vorliegende Erfindung eine Anzeigeeinrichtung in einem Fahrzeug zum Anzeigen von den Betrieb des Fahrzeugs betreffende Informationen mit einer Steuereinrichtung, welche die Anzeige eines Displays steuert. Dabei kann die Steuereinrichtung die Anzeigeeinrichtung so ansteuern, dass sich bei einer Veränderung des Anzeigebildes ein Bildparameter verändert, wobei Zwischenbilder angezeigt werden.

Die Anzahl von Informationen, die einem Fahrzeugführer aufgrund der steigenden Anzahl von Komforteinrichtungen angezeigt werden steigt ständig. Zu den Komforteinrichtungen, die in modernen Fahrzeugen eingesetzt werden zählen Navigationseinrichtungen, Telekommunikationseinrichtungen, Fahrerassistenzsystemen und Warnhinweise zu eine Vielzahl von Einrichtungen des Fahrzeugs und zu Umgebungsbedingungen. In vielen Fahrzeugen werden deshalb so genannte Multifunktions-Bedien- und Anzeigeeinrichtungen eingesetzt. Herkömmlicherweise ist das Display solcher Multifunktions-Bedien- und Anzeigeeinrichtungen in der Mittelkonsole angeordnet. Des Weiteren weisen solche Fahrzeuge ein so genanntes Kombiinstrument nahe des primären Sichtfeldes des Fahrzeugführers auf, welches dynamische Informationen und Überwachungsinformationen anzeigt, auf welche der Fahrzeugführer ggfs. unmittelbar reagieren soll. Neuerdings weisen die Kombiinstrumente neben herkömmlichen Rundinstrumenten auch frei programmierbare Displays auf, welche Informationen einer Navigationseinrichtung, einer Telekommunikationseinrichtung und insbesondere der Fahrerassistenzsysteme darstellen. Die Darstellung umfassender Informationen im Kombiinstrument des Fahrzeugs hat den Vorteil, dass der Fahrzeugführer zur Wahrnehmung der dargestellten Informationen seinen Blick nur geringfügig vom Fahrgeschehen abwenden muss.

Wenn zu umfassende Informationen im Kombiinstrument dargestellt werden, ergibt sich allerdings das Problem, dass der Fahrzeugführer die gewünschte Information nicht mehr schnell und intuitiv erfassen kann und von der Informationsfülle auf dem Display des Kombünstruments vom Fahren abgelenkt wird. Aus diesem Grund wird an neuen Konzepten gearbeitet, wie Informationen mittels Anzeigeeinrichtungen in einem Fahrzeug, insbesondere mittels des Kombiinstruments, in der Nähe des Blickfeldes des Fahrzeugführers dargestellt werden können. Bei der Informationsdarstellung ist es besonders wichtig, dass der Fahrzeugführer die Informationen so schnell und intuitiv wie möglich aufnehmen kann. Gleichzeitig sollten solche Informationen angezeigt werden, die für den Fahrzeugführer in der jeweiligen Fahrsituation besonders relevant sind.

Bei einer Veränderung des Anzeigebildes auf dem Display ergibt sich im Fahrzeug das Problem, dass der Betrachter das Anzeigebild während der Veränderung nicht fortwährend wahrnimmt. Bei herkömmlichen Verfahren und Anzeigeeinrichtungen zum Anzeigen von den Betrieb des Fahrzeugs betreffende Informationen wird das Anzeigebild abrupt verändert. Der Betrachter hat in diesem Fall häufig Probleme, sich hinsichtlich der Anordnung der dargestellten Informationen im neuen Anzeigebild zu orientieren. Insbesondere, wenn eine große Anzahl von Anzeigeoberflächen dargestellt wird, fällt auch ein Wiedererkennungseffekt hinsichtlich der Anordnung der Informationen weg, so dass der Betrachter längere Zeit benötigt, um die dargestellten Informationen zu erfassen. Dies ist im Fahrzeug insbesondere dann nachteilig, wenn der Betrachter der Fahrzeugführer ist.

Es ist die Aufgabe der vorliegenden Erfindung, ein Verfahren und eine Anzeigeeinrichtung der eingangs genannten Art bereitzustellen, bei welchen der Betrachter die in dem veränderten Anzeigebild dargestellten Informationen schnell und intuitiv erfassen kann.

Diese Aufgabe wird durch ein Verfahren mit den Merkmalen des Anspruchs 1 und einer Anzeigeeinrichtung mit den Merkmalen des Anspruchs 13 gelöst. Vorteilhafte Aus- und Weiterbildungen ergeben sich aus den Unteransprüchen.

Das erfindungsgemäße Verfahren ist dadurch gekennzeichnet, dass der Bildparameter, welcher das Anzeigebild verändert, wie folgt berechnet wird:

$$P_{n+1} = P_n + (P_m - P_n) \cdot F$$

Bei obiger Formel ist n eine natürliche Zahl, $P_0$ der Wert des Bildparameters der dargestellten Information im Ausgangszustand, $P_m$ eine Konstante und F ein Transformationsparameter. Für den Transformationsparameter F gilt, dass

$$F > 2$$

oder

$$1 < F < 2$$

oder

$$0 < F < 1$$

oder

$$F < 0$$

ist.

Mit dem erfindungsgemäßen Verfahren kann eine Veränderung des Anzeigebildes erzeugt werden, welche sich an vielfältige Anzeigeinhalte anpassen lässt und bei welcher der Betrachter die Veränderung leicht nachvollziehen kann, so dass ihm die Orientierung im neuen Anzeigebild erleichtert wird. Auf diese Weise kann er die im neuen Anzeigebild dargestellte Information schnell und intuitiv erfassen.

Gemäß einer bevorzugten Ausgestaltung des erfindungsgemäßen Verfahrens verändert sich das Anzeigebild von einem Ausgangszustand zu einem Endzustand, wobei Zwischenbilder angezeigt werden. In diesem Fall läuft der Index n von 0 bis m, $P_0$ ist der Wert des Bildparameters der dargestellten Information im Ausgangszustand und $P_m$ der Wert des Bildparameters der dargestellten Information im Endzustand. Für den Transformationsparameter F gilt:

$$1 < F < 2$$

oder

$$0 < F < 1.$$

Mittels des Transformationsparameters F kann festgelegt werden, wie schnell sich das Anzeigebild vom Ausgangszustand in bestimmten Bereichen dem Endzustand annähert. Ist der Transformationsparameter zwischen 0 und 1 ergibt sich eine rasche Annäherung an den Endzustand mit abschließender Verzögerung. Kleinere Werte des Transformationsparameters führen dabei zu einer langsameren Annäherung als größere Werte des Transformationsparameters.

Für eine langsame Annäherung an den Endzustand hat sich für die Wiedergabe von Informationen in einem Fahrzeug für den Transformationsparameter F ein Bereich von 0,15 bis 0,25 als bevorzugt ergeben, wobei für eine langsame Annäherung ein Transformationsparameter von 0,2 besonders bevorzugt ist.

Für eine mittlere Annäherung an den Endzustand hat sich für die Darstellung von Informationen in einem Fahrzeug ein vorteilhafter Bereich von 0,45 bis 0,55 für den Transformationsparameter ergeben, wobei ein Wert von 0,5 bevorzugt ist.

Für eine schnelle Annäherung an den Endzustand hat sich für die Darstellung von Informationen in einem Fahrzeug für den Transformationsparameter ein Bereich von 0,88 bis 0,92 als vorteilhaft herausgestellt, wobei ein Wert von 0,9 bevorzugt ist.

Für Werte des Transformationsparameters, die zwischen 1 und 2 liegen, ergibt sich eine oszillierende Annäherung an den Endzustand mit abschließender Verzögerung. Bei derartigen oszillierenden Annäherungen hat sich bei der Darstellung von Informationen in einem Fahrzeug als vorteilhaft herausgestellt, wenn der Transformationsparameter zwischen 1,25 und 1,35 liegt, wobei der Wert 1,3 bevorzugt ist, oder zwischen 1,45 und 1,55 liegt, wobei in diesem Fall 1,5 bevorzugt ist.

Gemäß einer Weiterbildung des erfindungsgemäßen Verfahrens ändert sich der Transformationsparameter zeitlich, es gilt somit F = F (n), wenn n den Index für zeitlich aufeinanderfolgende Zwischenbilder angibt.

Gemäß einer anderen Ausgestaltung des erfindungsgemäßen Verfahrens ist der Transformationsparameter größer als 2. In diesem Fall ist ein Abbruchkriterium für die Berechnung des Parameters definiert. Ist der Transformationsparameter größer als 2, ergibt sich nämlich eine oszillierende Entfernung von dem Ausgangszustand mit einer Beschleunigung. Kleinere Werte des Transformationsparameters führen dabei zu einer langsameren Entfernung vom Ausgangszustand als größere Werte des Transformationsparameters.

Gemäß einer weiteren Ausbildung des erfindungsgemäßen Verfahrens ist der Transformationsparameter kleiner als Null, wobei auch in diesem Fall ein Abbruchkriterium für die Berechnung des Parameters definiert ist. Für negative Werte des Transformationsparameters ergibt sich eine Entfernung von dem Ausgangszustand in negativer Richtung mit Beschleunigung. Kleinere Absolutwerte des Transformationsparameters führen zu einer langsameren Entfernung vom Ausgangszustand und einer langsameren Beschleunigung als großer Absolutwerte des Transformationsparameters.

Für das Abbruchkriterium kann beispielsweise ein Schwellwert definiert werden, wobei bei der Berechnung des Parameters abgebrochen wird, wenn der Absolutwert des Parameters größer als dieser Schwellwert ist.

Bei der Auswahl des Transformationsparameters sind die Besonderheiten bei der Anzeige von Informationen im Fahrzeug zu berücksichtigen. Es hat sich herausgestellt, dass herkömmliche Veränderungen des Anzeigebildes, wie sie bei konventionellen Graphiken verwendet werden, bei einer Verwendung im Fahrzeug nachteilhaft sind, da sie entweder eine zu große Aufmerksamkeit des Betrachters erfordern oder eine Orientierung erschweren, wenn der Betrachter beim Übergang den Blick zwischenzeitlich abwendet. Es hat sich herausgestellt, dass die vorstehend angegebene Berechnungsformel für den Bildparameter und die angegebenen Wertebereiche und Werte des Transformationsparameters für eine Anwendung in einem Fahrzeug, insbesondere einem Kraftfahrzeug, besonders bevorzugt sind.

Der Bildparameter kann das Anzeigebild auf vielfältige Weise charakterisieren und verändern. Der Bildparameter kann beispielsweise die Position einer in einem Teilbereich des Anzeigebildes dargestellten Information sein. Ist in diesem Fall der Transformationsparameter zwischen 0 und 2, wandert die dargestellte Information von einem ersten Teilbereich des Anzeigebildes zu einem zweiten Teilbereich des Anzeigebildes, wobei beim Übergang vom Ausgangszustand zum Endzustand Zwischenbilder angezeigt werden. Die Veränderung zwischen zwei aufeinanderfolgenden Zwischenbildern wird von dem Transformationsparameter bestimmt. Der Transformationsparameter bestimmt in diesem Fall somit wie schnell in bestimmten Zeitintervallen sich der erste Teilbereich geometrisch dem zweiten Teilbereich annähert.

Ist der Transformationsparameter größer als 2 oder kleiner als Null kann ein Herauswandern der dargestellten Information, wie z. B. ein Herauswandern eines dargestellten Objekts aus dem Anzeigebild realisiert werden. Das Abbruchkriterium wird in diesem Fall dadurch bestimmt, dass die dargestellte Information nicht mehr im Anzeigebereich dargestellt wird.

Unter einer Positionsveränderung wird im Sinne der Erfindung sowohl eine Translation als auch eine Rotation sowie Kombinationen dieser beiden Operationen für eine im Anzeigebild dargestellte Information verstanden.

Gemäß einer anderen Ausgestaltung des erfindungsgemäßen Verfahrens betrifft der Bildparameter die Helligkeit einer auf dem Display dargestellten Information. Wenn der Transformationsparameter zwischen 0 und 2 ist, geht die Helligkeit der dargestellten Information somit von einer Ausgangshelligkeit in eine Endhelligkeit über, wobei beim Übergang von der Ausgangshelligkeit in die Endhelligkeit Zwischenhelligkeiten angezeigt werden. Ist der Transformationsparameter in diesem Fall größer als 2 oder kleiner als Null kann ein Ausblenden der dargestellten Informationen durch einen Übergang in einen Zustand maximaler Helligkeit, z. B. ein weißes Bild, oder ein Zustand minimaler Helligkeit, z. B. ein schwarzes Bild, verwirklicht werden. Als Abbruchkriterium wird in diesem Fall ein bestimmter Maximal- oder Minimalwert für die Helligkeit definiert.

Gemäß einer weiteren Ausgestaltung des erfindungsgemäßen Verfahrens betrifft der Bildparameter die Farbe einer auf dem Display dargestellten Information. Für einen Transformationsparameter zwischen 0 und 2 geht in diesem Fall die Farbe der dargestellten Informationen von einer Ausgangsfarbe in eine Endfarbe über, wobei beim Übergang Zwischenfarben angezeigt werden. Der Begriff "Farbe" umfasst in diesem Fall sowohl den Farbton als auch die Farbsättigung.

Gemäß einer weiteren Ausgestaltung des erfindungsgemäßen Verfahrens betrifft der Bildparameter die Skalierung einer auf dem Display dargestellten Information. Für Transformationsparameter zwischen 0 und 2 kann somit die dargestellte Information vergrößert oder verkleinert werden.

Gemäß einer weiteren Ausgestaltung des erfindungsgemäßen Verfahrens betrifft der Bildparameter die Transparenz einer auf dem Display dargestellten Information. Für Transformationsparameter zwischen 0 und 2 kann somit eine einem anderen Bild überlagerte Information stärker sichtbar oder weniger sichtbar gemacht werden. Für Transformationsparameter, die kleiner als 0 oder größer als 2 sind, kann die dargestellte Information auch vollständig zum Verschwinden gebracht werden oder undurchsichtig gemacht werden.

Die erfindungsgemäße Anzeigeeinrichtung ist dadurch gekennzeichnet, dass mit der Steuereinrichtung die Anzeigeeinrichtung so ansteuerbar ist, dass sich bei einer Veränderung des Anzeigebildes ein Bildparameter verändert, der wie folgt berechnet wird:

$$P_{n+1} = P_n + (P_m - P_n) \cdot F$$

wobei n eine natürliche Zahl ist, $P_0$ der Wert des Bildparameters der dargestellten Information im Ausgangszustand ist, $P_m$ eine Konstante ist und F ein Transformationsparameter ist. Für den Transformationsparameter F gilt, dass

$$F > 2$$

oder

$$1 < F < 2$$

oder

$$0 < F < 1$$

oder

$$F < 0$$

ist.

Bevorzugt ist mit der Steuereinrichtung die Anzeigeeinrichtung so ansteuerbar, dass sich das Anzeigebild von einem Ausgangszustand zu einem Endzustand verändert, wobei Zwischenbilder angezeigt werden, wobei n von 0 bis m läuft, $P_0$ der Wert des Bildparameters der dargestellten Information im Ausgangszustand ist, $P_m$ der Wert des Bildparameters der dargestellten Information im Endzustand ist und der Transformationsparameter zwischen 0 und 2 liegt.

Der Bildparameter kann wie vorstehend angegeben die Position einer in einem Teilbereich des Anzeigebildes dargestellten Information, die Helligkeit, die Farbe, die Skalierung und/oder die Transparenz auf dem Display dargestellten Information betreffen.

Der Bildparameter kann auch Kombinationen der vorstehend genannten Charakterisierungen des Anzeigebildes betreffen, wobei es auch möglich ist, dass für jede Charakterisierung, wie die Position, die Helligkeit, die Farbe, die Skalierung und die Transparenz ein separater Bildparameter mit der vorstehend genannten Formel berechnet wird.

Die Erfindung wird nun anhand eines Ausführungsbeispiels mit Bezug zu den Figuren erläutert.

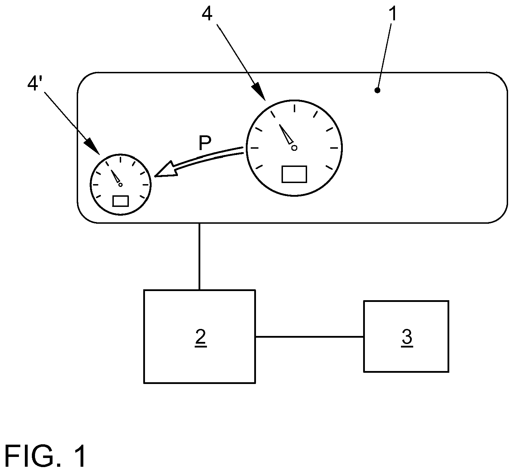

Figur 1    zeigt schematisch den Aufbau der erfindungsgemäßen Anzeigeeinrichtung,

Figur 2    zeigt ein Beispiel einer zeitlichen Veränderung des Bildparameters für einen Transformationsparameter F = 0,2,

Figur 3    zeigt ein Beispiel einer zeitlichen Veränderung des Bildparameters für einen Transformationsparameter F = 0,5,

Figur 4    zeigt ein Beispiel einer zeitlichen Veränderung des Bildparameters für einen Transformationsparameter F = 0,9,

Figur 5    zeigt ein Beispiel einer zeitlichen Veränderung des Bildparameters für einen Transformationsparameter F = 1,3

Figur 6    zeigt ein Beispiel einer zeitlichen Veränderung des Bildparameters für einen Transformationsparameter F = 1,5,

Figur 7    zeigt ein Beispiel einer zeitlichen Veränderung des Bildparameters für einen Transformationsparameter F -0,2 und

Figur 8    zeigt ein Beispiel einer zeitlichen Veränderung des Bildparameters für einen Transformationsparameter F = 2,2.

Die Anzeigeeinrichtung umfasst ein Display 1, welches mit einer Steuereinrichtung 2 gekoppelt ist. Die Steuereinrichtung 2 erzeugt Graphikdaten, die an das Display 1 übertragen werden und von diesem so dargestellt werden, dass ein Anzeigebild sichtbar ist. Mit der Steuereinrichtung 2 ist somit auch eine Veränderung des von dem Display 1 dargestellten Anzeigebildes steuerbar. Die Steuereinrichtung 2 ist ferner mit einer Bedieneinheit 3 gekoppelt, über welche der Benutzer Eingaben tätigen kann. Mit einer Eingabe über die Eingabeeinrichtung 3 kann der Nutzer Veränderungen des Anzeigebildes auf dem Display 1 induzieren. Ferner können solche Veränderungen auch automatisch von der Anzeigeeinrichtung induziert werden. Schließlich kann die Steuereinrichtung 2 mit einem Fahrzeugbus oder direkt mit Einrichtungen des Fahrzeugs gekoppelt sein, um Daten zu empfangen, die den Betrieb des Fahrzeugs betreffen.

Im Folgenden wird ein Beispiel erläutert, bei dem auf dem Display 1 eine Graphik 4 für eine analoge Geschwindigkeitsanzeige wiedergegeben wird. Nach der Betätigung eines Schalters der Bedieneinheit 3 wird der geometrische Ort und die Skalierung der Graphik 4 für die Geschwindigkeitsanzeige von dem Ausgangszustand in einem Endzustand verändert, bei der die Graphik 4' für die Geschwindigkeitsanzeige angezeigt wird. Der Übergang zwischen diesen beiden Zuständen ist durch den Pfeil P angedeutet. Bei diesem Übergang werden von dem Display 1 Zwischenbilder angezeigt.

Es wird darauf hingewiesen, dass auch andere Veränderungen des Anzeigebildes entsprechend verwirklicht werden können. Beispielsweise kann die Helligkeit, die Farbe oder die Transparenz oder Kombinationen dieser Bildparameter verändert werden.

Der Bildparameter P charakterisiert bei der folgenden Beschreibung die geometrische Position der Graphik 4 für die Geschwindigkeitsanzeige beim Übergang vom Ausgangszustand zum Endzustand sowie die Skalierung, d. h. die Größe dieser Geschwindigkeitsanzeige. Die Zwischenbilder, die zwischen dem Ausgangszustand und dem Endzustand angezeigt werden, werden hinsichtlich des Bildparameters P wie folgt berechnet:

$$P_{n+1} = P_n + (P_m - P_n) \cdot F$$

Der Index n läuft in diesem Fall von 0 bis m. Der Wert des Bildparameters $P_0$ charakterisiert den geometrischen Ort und die Skalierung der Graphik 4 für die Geschwindigkeitsanzeige im Ausgangszustand. Der Bildparameter $P_m$ charakterisiert die Graphik 4' für die Geschwindigkeitsanzeige hinsichtlich ihres Ortes und ihrer Skalierung im Endzustand. Mittels des Transformationsparameters F kann bestimmt werden, ob sich die Geschwindigkeitsanzeige dem Endzustand direkt annähert oder oszillierend annähert. Ferner können die Beschleunigungen bei der Veränderung des Parameters eingestellt werden. Jeder Wert des Bildparameters $P_0$, $P_1$, $P_2$, ... , $P_m$ charakterisiert ein Zwischenbild. Das Zeitintervall zwischen zwei Zwischenbildern wird konstant gewählt. Die Anzeigebilder werden auf dem Display 1 somit mit einer festen Frequenz angezeigt.

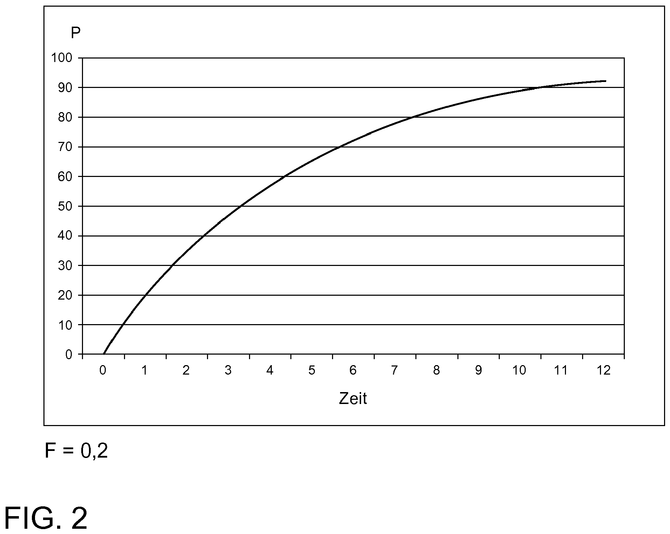

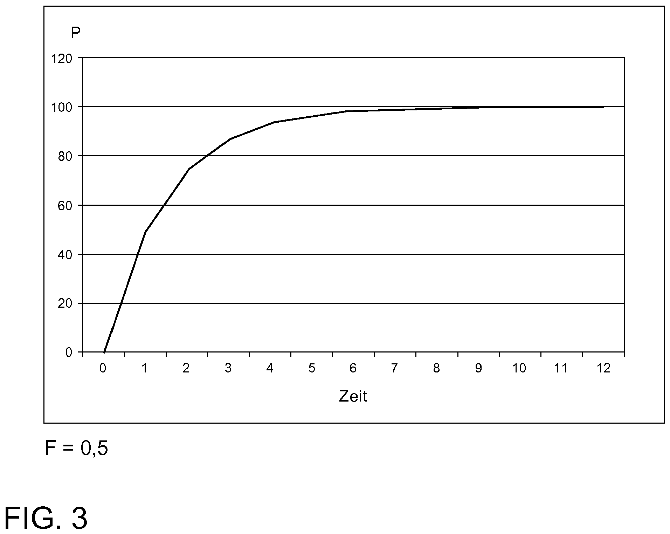

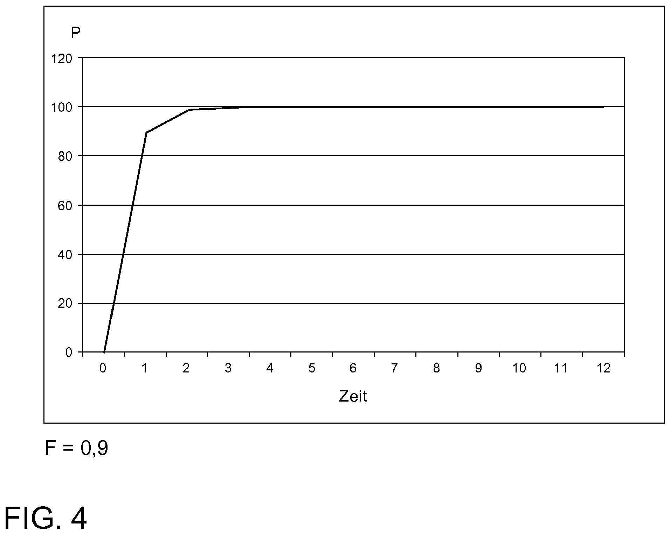

In den Figuren 2 bis 4 sind drei bevorzugte Beispiele für den Transformationsparameter F graphisch dargestellt. Figur 2 zeigt eine Kurve für F = 0,2, Figur 3 zeigt die Kurve für F = 0,5 und Figur 4 zeigt die Kurve für F = 0,9. Der Bildparameter P ist in willkürlichen Einheiten dargestellt. Für den Ausgangszustand $P_0$ wurde ein Wert von 0 gewählt, für den Endzustand $P_m$ wurde ein Wert von 100 gewählt.

Wie aus Figur 2 ersichtlich zeigt die Kurve zunächst eine große Beschleunigung für die Annäherung an den Endzustand, die zunehmend abflacht. Insgesamt nähert sich die Geschwindigkeitsanzeige 4 sehr langsam dem Endzustand 4' an. Bei den in der Figur 2 aufgetragenen 13 Anzeigebildern wurde der Endzustand noch nicht erreicht.

In Figur 3 ist eine mittelschnelle Annäherung an den Endzustand 4' gezeigt. Dabei ist die Beschleunigung zunächst relativ groß und verlangsamt sich mit der Zeit zunehmend. Der Endzustand wird erst nach 32 Anzeigebildern erreicht. Nach 9 Zwischenbildern hat sich der Anzeigezustand jedoch bereits auf 99 % dem Endzustand 4' angenähert. Es wäre in einem solchen Fall möglich, ein Abbruchkriterium zu definieren, so dass die Iteration abgebrochen wird, wenn sich der Bildparameter P auf einen bestimmten Betrag an den Endzustand angenähert hat.

In Figur 4 ist eine sehr schnelle Annäherung und direkte Annäherung an den Endzustand 4' gezeigt.

Bereits nach drei Bildern hat sich ein Zwischenbild auf 99 % dem Endzustand angenähert. Nach elf Bildern ist der Endzustand erreicht.

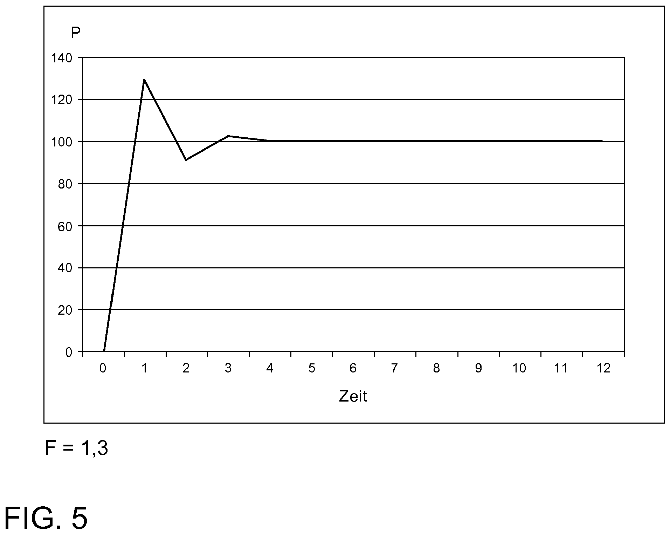

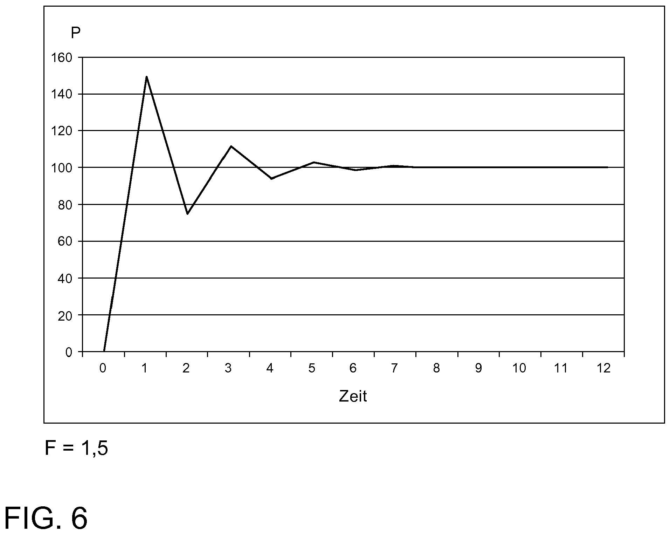

In den Figuren 5 und 6 sind oszillierende Annäherungen an den Endzustand 4' gezeigt. Figur 5 zeigt die Kurve für F = 1,3 und Figur 6 die Kurve für F = 1,5. Für die in Figur 5 gezeigte Kurve ergibt sich eine relativ schnelle oszillierende Annäherung an den Endzustand. Bereits nach fünf Bildern ist die Abweichung von dem Endzustand 4' kleiner als 1 %. Nach achtzehn Anzeigebildern ist der Endzustand 4' erreicht. Auch in diesem Fall könnte das vorstehend genannte Abbruchkriterium angewandt werden.

Bei der in Figur 6 gezeigten Kurve ergibt sich eine langsamere oszillierende Annäherung an den Endzustand. Erst nach 32 Bildern wird der Endzustand 4' erreicht.

Eine oszillierende Annäherung an den Endzustand, wie sie durch die in Figur 5 und 6 gezeigten Kurven erreicht werden, ergibt eine Veränderung des Anzeigebildes, welche für den Betrachter sehr natürlich und wenig technisch erscheint. Es entspricht einem Federn, wie es der Betrachter von Vorgängen in seiner natürlichen Umgebung kennt. Hierdurch kann der Betrachter die Veränderung des Anzeigebildes leichter nachvollziehen, wodurch ihm die Orientierung beim Übergang vom Anfangszustand zum Endzustand erleichtert wird.

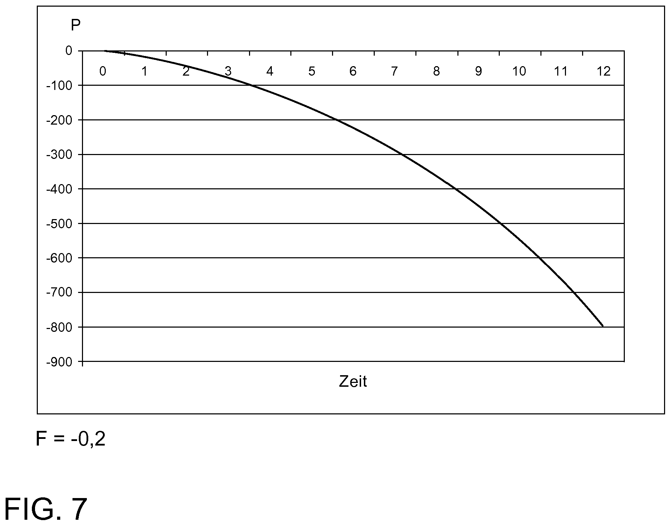

In Figur 7 ist ein Beispiel für einen negativen Transformationsparameter F gezeigt, nämlich für einen Wert von F = -0,2. Es ergibt sich, dass sich in diesem Fall das Anzeigebild mit größer werdender Beschleunigung von dem Ausgangszustand entfernt. Ein Herauswandern der Geschwindigkeitsanzeige 4 aus dem Anzeigebereich des Displays 2 kann auf diese Weise verwirklicht werden. Zunächst bewegt sich die Geschwindigkeitsanzeige 4 langsam und schließlich immer schneller nach außen, bis es nicht mehr sichtbar ist. Als Abbruchkriterium wird in diesem Fall definiert, dass die Geschwindigkeitsanzeige 4 nicht mehr innerhalb des Anzeigebereichs des Displays 1 ist.

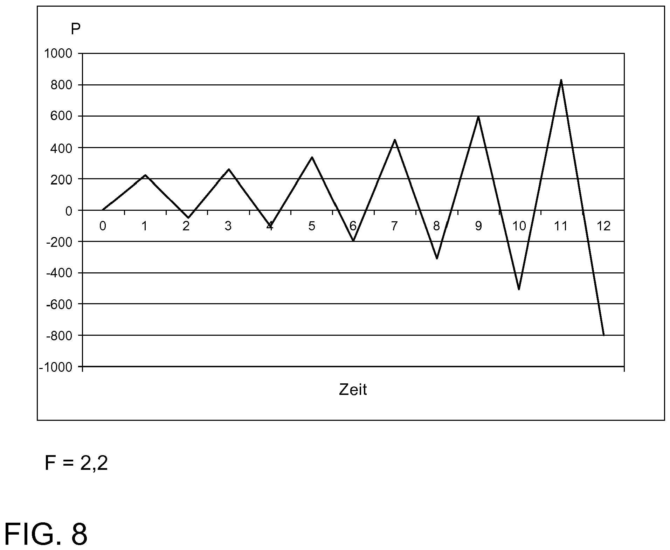

In Figur 8 ist ein Beispiel für einen Transformationsparameter für Werte größer als 2 gezeigt, nämlich für F = 2,2. Es ergibt sich, dass der Bildparameter P um den Endzustand oszilliert und dabei seinen Abstand immer weiter vergrößert. Auch in einem solchen Fall wird ein Abbruchkriterium definiert. Beispielsweise kann die Berechnung abgebrochen werden, wenn der Absolutbetrag des Bildparameters P einen bestimmten Schwellwert überschreitet.

**BEZUGSZEICHENLISTE**

1 Display
2 Steuereinrichtung
3 Bedieneinheit
4 Graphik für die Geschwindigkeitsanzeige im Ausgangszustand
4' Graphik für die Geschwindigkeitsanzeige im Endzustand

**Patentansprüche**

1. Verfahren zum Anzeigen von den Betrieb eines Fahrzeugs betreffende Informationen auf einem Display (1), bei dem ein Anzeigebild durch Veränderung eines Bildparameters verändert wird, **dadurch gekennzeichnet,** **dass** der Bildparameter wie folgt berechnet wird:

$$P_{n+1} = P_n + (P_m - P_n) \cdot F,$$

wobei n eine natürliche Zahl ist, $P_0$ der Wert des Bildparameters der dargestellten Information im Ausgangszustand ist, $P_m$ eine Konstante ist und den Wert des Bildparameters der dargestellten Information im Endzustand darstellt und F ein Transformationsparameter ist, für den gilt, dass er zwischen 1 und 2 liegt.

2. Verfahren nach Anspruch 1, **dadurch gekennzeichnet,** **dass** für den Transformationsparameter F gilt:

$$1{,}25 < F < 1{,}35$$

oder

$$1{,}45 < F < 1{,}55.$$

3. Verfahren nach einem der vorstehenden Ansprüche, **dadurch gekennzeichnet,** **dass** sich der Transformationsparameter F zeitlich ändert.

4. Verfahren nach einem der vorstehenden Ansprüche, **dadurch gekennzeichnet,** **dass** der Bildparameter die Position einer in einem Teilbereich des Anzeigebildes dargestellten Information betrifft.

5. Verfahren nach einem der vorstehenden Ansprüche, **dadurch gekennzeichnet,** **dass** der Bildparameter die Helligkeit einer auf dem Display (1) dargestellten Information betrifft.

6. Verfahren nach einem der vorstehenden Ansprüche, **dadurch gekennzeichnet,** **dass** der Bildparameter die Farbe einer auf dem Display (1) dargestellten Information betrifft.

**7.** Verfahren nach einem der vorstehenden Ansprüche, **dadurch gekennzeichnet,** **dass** der Bildparameter die Skalierung einer auf dem Display (1) dargestellten Information betrifft.

**8.** Verfahren nach einem der vorstehenden Ansprüche, **dadurch gekennzeichnet,** **dass** der Bildparameter die Transparenz einer auf dem Display (1) dargestellten Information betrifft.

**9.** Anzeigeeinrichtung für ein Fahrzeug zum Anzeigen von den Betrieb des Fahrzeugs betreffende Informationen auf einem Display (1), wobei eine Steuereinrichtung (2) die Anzeige auf dem Display (1) steuert, **dadurch gekennzeichnet,** **dass** mit der Steuereinrichtung (2) die Anzeigeeinrichtung so ansteuerbar ist, dass sich bei einer Veränderung des Anzeigebildes ein Bildparameter verändert, der wie folgt berechnet wird:

$$P_{n+1} = P_n + (P_m - P_n) \cdot F \, ,$$

wobei n eine natürliche Zahl ist, $P_0$ der Wert des Bildparameters der dargestellten Information im Ausgangszustand (4) ist, $P_m$ eine Konstante ist und den Wert des Bildparameters der dargestellten Information im Endzustand darstellt und F ein Transformationsparameter ist, für den gilt, dass er zwischen 1 und 2 liegt.

**10.** Anzeigeeinrichtung nach Anspruch 9, **dadurch gekennzeichnet,** **dass** mit der Steuereinrichtung (2) die Anzeigeeinrichtung so ansteuerbar ist, dass sich das Anzeigebild von einem Ausgangszustand (4) zu einem Endzustand (4') verändert, wobei Zwischenbilder angezeigt werden, wobei n von 0 bis m läuft.

**Claims**

**1.** Method for displaying information relating to the operation of a vehicle on a display (1), in which a display image is modified by modifying an image parameter, **characterized** **in that** the image parameter is calculated as follows:

$$P_{n+1} = P_n + (P_m - P_n) \cdot F,$$

where n is a natural number, $P_0$ is the value of the image parameter of the represented information in the initial state, $P_m$ is a constant and represents the value of the image parameter of the represented information in the final state and F is a transformation parameter for which the fact that it lies between 1 and 2 holds true.

**2.** Method according to Claim 1, **characterized** **in that** the following holds true for the transformation parameter F:

$$1.25 < F < 1.35$$

or

$$1.45 < F < 1.55$$

**3.** Method according to either of the preceding claims, **characterized** **in that** the transformation parameter F varies over time.

**4.** Method according to any one of the preceding claims, **characterized** **in that** the image parameter relates to the position of information represented in a portion of the display image.

**5.** Method according to any one of the preceding claims, **characterized** **in that** the image parameter relates to the brightness of information represented on the display (1).

**6.** Method according to any one of the preceding claims, **characterized** **in that** the image parameter relates to the colour of information represented on the display (1).

**7.** Method according to any one of the preceding claims, **characterized** **in that** the image parameter relates to the scaling of information represented on the display (1).

**8.** Method according to any one of the preceding claims, **characterized** **in that** the image parameter relates to the transparency of information represented on the display (1).

**9.** Display device for a vehicle for displaying information relating to the operation of the vehicle on a display (1), wherein a control device (2) controls the display on the display (1), **characterized** **in that** the display device is actuatable by means of the control device (2) in such a way that an image parameter is modified in the case of a modification of the display image, said image parameter being calculated as follows:

$$P_{n+1} = P_n + (P_m - P_n) \cdot F,$$

where n is a natural number, $P_0$ is the value of the image parameter of the represented information in the initial state (4), $P_m$ is a constant and represents the value of the image parameter of the represented information in the final state and F is a transformation parameter for which the fact that it lies between 1 and 2 holds true.

10. Display device according to Claim 9,
**characterized**
**in that** the display device is actuatable by means of the control device (2) in such a way that the display image changes from an initial state (4) to a final state (4'), wherein intermediate images are displayed, where n runs from 0 to m.

**Revendications**

1. Procédé d'affichage sur un afficheur (1) d'informations concernant le fonctionnement d'un véhicule, dans lequel une image d'image d'affichage est modifiée par modification d'un paramètre d'image,
**caractérisé en ce que** le paramètre d'image est calculé comme suit :

$$P_{n+1} = P_n + (P_m - P_n) \cdot F,$$

où n est un entier naturel, $P_0$ est la valeur du paramètre d'image de l'information représentée dans l'état de départ, $P_m$ est une constante et représente la valeur du paramètre d'image de l'information représentée et F est un paramètre de transformation qui est compris entre 1 et 2.

2. Procédé selon la revendication 1,
**caractérisé en ce que**
le paramètre de transformation F est tel que :

$$1{,}25 < F < 1{,}35$$

ou

$$1{,}45 < F < 1{,}55.$$

3. Procédé selon l'une des revendications précédentes,
**caractérisé en ce que** le paramètre de transformation F varie dans le temps.

4. Procédé selon l'une des revendications précédentes,
**caractérisé en ce que** le paramètre d'image concerne la position d'une information représentée dans une zone partielle de l'image d'affichage.

5. Procédé selon l'une des revendications précédentes,
**caractérisé en ce que** le paramètre d'image concerne la luminosité d'une information représentée sur l'afficheur (1).

6. Procédé selon l'une des revendications précédentes,
**caractérisé en ce que** le paramètre d'image concerne la couleur d'une information représentée sur l'afficheur (1).

7. Procédé selon l'une des revendications précédentes,
**caractérisé en ce que** le paramètre d'image concerne l'échelle d'une information représentée sur l'afficheur (1).

8. Procédé selon l'une des revendications précédentes,
**caractérisé en ce que** le paramètre d'image concerne la transparence d'une information représentée sur l'afficheur (1).

9. Dispositif d'affichage destiné à un véhicule, permettant d'afficher sur un afficheur (1) des informations concernant le fonctionnement du véhicule, dans lequel un dispositif de commande (2) commande l'affichage sur l'afficheur (1),
**caractérisé en ce que** le dispositif d'affichage peut être commandé au moyen du dispositif de commande (2) de manière à ce qu'un paramètre d'image se modifie lors d'une modification de l'image d'affichage, lequel paramètre est calculé comme suit :

$$P_{n+1} = P_n + (P_m - P_n) \cdot F,$$

où n est un entier naturel, $P_0$ est la valeur du paramètre d'image de l'information représentée dans l'état de départ (4), $P_m$ est une constante et représente la valeur du paramètre d'image de l'information représentée et F est un paramètre de transformation qui est compris entre 1 et 2.

10. Dispositif d'affichage selon la revendication 9,
**caractérisé en ce que** le dispositif d'affichage peut être commandé au moyen du dispositif de commande (2) de manière à ce que l'image d'affichage se modifie d'un état de départ (4) à un état final (4'), où des images intermédiaires sont affichées, où n va de 0 à m.

FIG. 1

F = 0,2

FIG. 2

P

120

100

80

60

40

20

0

0   1   2   3   4   5   6   7   8   9   10   11   12

Zeit

F = 0,5

FIG. 3

F = 0,9

FIG. 4

F = 1,3

FIG. 5

F = 1,5

# FIG. 6

F = -0,2

FIG. 7

F = 2,2

FIG. 8